(19) Europäisches Patentamt

European Patent Office

Office européen des brevets

(11) EP 2 130 589 B1

## (12) EUROPEAN PATENT SPECIFICATION

(45) Date of publication and mention
of the grant of the patent:
**13.03.2013 Bulletin 2013/11**

(21) Application number: **08022262.3**

(22) Date of filing: **22.12.2008**

(51) Int Cl.:
*B01J 35/04* (2006.01)          *B01J 29/00* (2006.01)
*B01D 53/92* (2006.01)          *F01N 3/00* (2006.01)
*B01D 53/94* (2006.01)          *B01J 29/72* (2006.01)
*C04B 38/00* (2006.01)          *F01N 3/022* (2006.01)
*F01N 3/28* (2006.01)

(54) **Honeycomb structure**

Wabenstruktur

Structure en nid d'abeille

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.05.2008 PCT/JP2008/059274**

(43) Date of publication of application:
**09.12.2009 Bulletin 2009/50**

(73) Proprietor: **Ibiden Co., Ltd.**
**Ogaki-shi**
**Gifu 503-8604 (JP)**

(72) Inventors:
• **Ohno, Kazushige**
**Ibi-Gun**
**Gifu 501-0695 (JP)**
• **Kunieda, Masafumi**
**Ibi-Gun**
**Gifu 501-0695 (JP)**
• **Ido, Takahiko**
**Ibi-Gun**
**Gifu 501-0695 (JP)**

(74) Representative: **HOFFMANN EITLE**
**Patent- und Rechtsanwälte**
**Arabellastrasse 4**
**81925 München (DE)**

(56) References cited:
**EP-A- 0 519 073          EP-A- 2 105 182**
**US-A1- 2007 259 770**

• **MUENCH JOERG, LEPPELT RAINER, DOTZEL
RALF: "Extruded zeolite based honeycomb
catalyst fo NOx removal from diesel exhaust"
SAE INTERNATIONAL TECHNICAL PAPER
SERIES, no. 2008-01-1024, 14 April 2008
(2008-04-14), - 14 April 2008 (2008-04-14) page 1-8,
XP009125783**

**Description**

BACKGROUND OF THE INVENTION

The present invention relates to a honeycomb structure.

Conventionally, various techniques have been developed to convert vehicle exhaust gas, however, sufficient countermeasures have not been taken for the increasing traffic. Emission restrictions will become tighter not only in Japan but all over the world. In particular, a restriction of NOx in diesel exhaust gas is becoming very strict. A conventional method to reduce NOx by controlling an engine combustion system is not sufficient anymore. As a diesel NOx converting system for such problems, there is a NOx reduction system (called an SCR system) using ammonia as a reducing agent.

As a catalyst carrier used in such a system, a honeycomb structure is widely known. A honeycomb structure disclosed in International Publication No. 2005/063653 is formed of a honeycomb unit, which is formed by mixing an inorganic binder and an inorganic fiber in γ alumina, ceria, zirconia, zeolite, or the like to form a mixture, and molding and firing the mixture formed in a honeycomb shape.

Japanese Patent No. 2675321 discloses a NOx converting method to reduce NOx in diesel exhaust gas by ammonia, using a honeycomb catalyst having through-holes (cells) with an equivalent diameter of 1.5 to 5 mm, a cell wall with a thickness of 0.3 to 0.9 mm, and a specific pore area with a pore volume of 40% or more of the total pore volume. This honeycomb catalyst is disclosed to have sufficient strength and NOx converting performance.

When forming a honeycomb unit to be used in the honeycomb structure as disclosed in International Publication No. 2005/063653 by molding and firing a material including zeolite as a main raw material, sufficient strength of the honeycomb unit cannot be kept in some cases when, in particular, zeolite is increased. Therefore, there is a problem in some cases that the honeycomb structure as disclosed in International Publication No. 2005/063653 cannot keep the performance as the NOx converting catalyst for the exhaust gas in the SCR system.

In the honeycomb catalyst as disclosed in Japanese Patent No. 2675321, a cell wall is as thick as 0.3 mm or more to keep the strength. With a thicker cell wall, however, a NOx gas in exhaust gas does not penetrate deep enough into the cell wall. Since an exhaust gas converting reaction occurs only on a surface of the cell wall, there is a case that the whole cell wall cannot be effectively used. In general, when a cell wall is thick and through-holes (cells) have a small equivalent diameter, an area occupied by the through-holes (cells) becomes small. When using this honeycomb catalyst for converting exhaust gas, a pressure loss of the exhaust gas through the honeycomb structure increases. Therefore, a larger honeycomb catalyst with a larger opening ratio is required to obtain desired flow characteristics and converting performance for the same vehicle exhaust gas. Since a NOx converting catalyst for the vehicle exhaust gas is required to be lightweight and downsized, it has been difficult to employ such a honeycomb catalyst as the NOx converting catalyst.

EP 0 519 073 A relates to a process for moulding and firing zeolite powder including the production of a calcined article of zeolite in the form of a honeycomb structure.

US 2007/259770 A1 relates to an extruded monolithic catalytic converter and manufacturing method thereof, in which a solid catalyst body has an active material that contains 60 to 87% by weight of an ion-exchanged zeolite containing at least one metal from the group containing Cu, Hf, La, Au, In, V, lanthanoids and transition metals of group VIII of the periodic system, more than 10 to 37% by weight of aluminium oxide and 2 to 10% by weight of inorganic fibers.

EP 2 105 182 A relates to a honeycomb structure disclosed before the publication date but after the earliest claimed priority date for the present disclosure and therefore is not relevant to the determination of an inventive step of the claimed subject-matter.

SUMMARY OF THE INVENTION

The invention is made in light of the above circumstances and may provide a honeycomb structure with superior converting performance as a NOx converting catalyst for vehicle exhaust gas, enough strength for a use in a vehicle, and a small flow resistance of the exhaust gas.

According to one aspect of the invention, there is provided a honeycomb structure as recited in Claim 1 below.

In the aforementioned honeycomb structure, the cell wall may have a porosity of 25 to 40%.

Further, a cell density of the honeycomb unit may be 39 to 124 cells/cm$^2$.

Further, a contained amount of the zeolite per apparent unit volume of the honeycomb unit may be 230 g/L or more.

Further, the zeolite may include at least one of β-type zeolite, Y-type zeolite, ferrierite, ZSM-5-type zeolite, mordenite, faujasite, zeolite A, and zeolite L.

Further, the zeolite may have a mole ratio of silica to alumina (silica/alumina ratio) of 30 to 50.

Further, the zeolite may include an exchanged ion of at least one of Fe, Cu, Ni, Co, Zn, Mn, Ti, Ag, and V.

Further, the zeolite may include an exchanged ion of Fe.

Further, the inorganic fiber may include at least one of an alumina fiber, a silica fiber, a silicon carbide fiber, a silica alumina fiber, a glass fiber, a potassium titanate fiber, and an aluminum borate fiber.

Further, the alumina may be derived from alumina sol.

Further, the honeycomb structure may be a plurality of honeycomb units that are bonded to each other with an adhesive, or may be a single honeycomb unit.

According to one embodiment of the invention, there is provided a honeycomb structure with superior converting performance as a NOx converting catalyst for vehicle exhaust gas, enough strength for a use in a vehicle, and a small flow resistance of the exhaust gas.

BRIEF DESCRIPTION OF THE DRAWINGS

FIG. 1A is a perspective view of a honeycomb structure formed of plural honeycomb units and FIG. 1B is a perspective view of a honeycomb structure formed of one honeycomb unit;

FIG. 2 is a perspective view of a honeycomb unit which forms the honeycomb structure shown in FIG. 1A; and

FIG. 3 is a graph showing a relationship between the content x of zeolite and the opening ratio y of honeycomb structures of examples and comparison examples.

DETAILED DESCRIPTION OF THE PREFERRED EMBODIMENTS

In general, a NOx converting catalyst for vehicle exhaust gas using a honeycomb structure is required to be small in size, lightweight, have enough strength against vibration and a pressure generated when the car is running, and have a small flow resistance of the exhaust gas and a sufficient NOx converting performance.

Therefore, the present inventors researched how contents of zeolite, an inorganic fiber, and alumina which are used as materials for a honeycomb unit in a honeycomb structure, a contained amount of zeolite, an opening ratio, and a cell density influence the strength and a catalytic performance of the honeycomb unit as a basic unit of the honeycomb structure. To improve the strength of the honeycomb unit, the content of zeolite is reduced, the contents of the inorganic fiber and alumina are increased, and the opening ratio is set small. To improve the catalytic performance, on the other hand, the content of zeolite is required to be increased and the opening ratio is required to be small. Further, to reduce the flow resistance of the honeycomb structure with respect to exhaust gas, the opening ratio is required to be large. Furthermore, to form a small and lightweight honeycomb unit, a thickness of the cell wall is required to be thin for the ease of the exhaust gas entering in the cell wall so that the whole cell wall including the surface can be effectively used as a catalyst. The inventors researched a relationship of the aforementioned parameters, in particular a relationship between the content of zeolite and the opening ratio, and discovered that the honeycomb structure of the present invention is favorable as a catalyst for a use in a vehicle, for converting NOx in diesel exhaust gas.

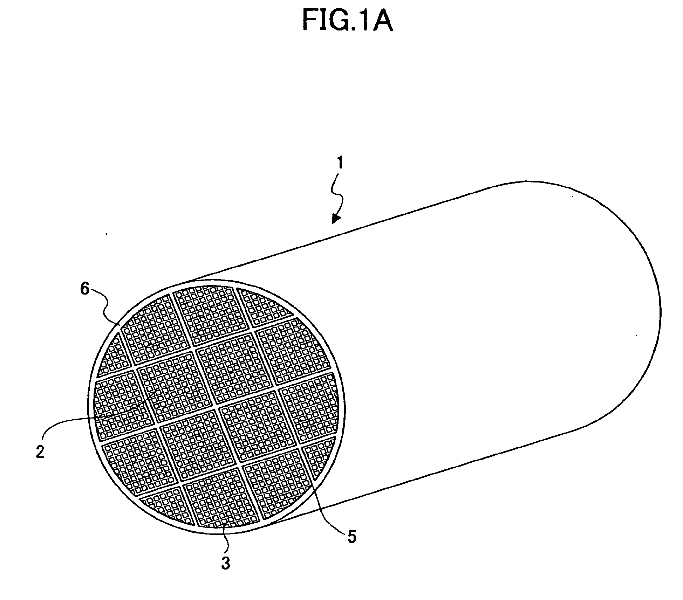

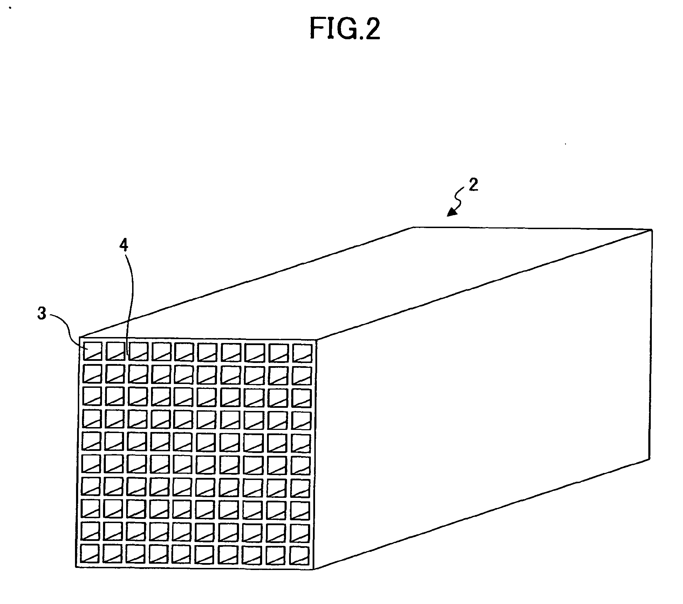

The honeycomb structure of the invention includes one or plural honeycomb units formed of a fired body in a shape in which plural cells extending from one end face to the other end face of the honeycomb structure in a longitudinal direction are separated by cell walls. FIG. 1A is a perspective view showing an example of the honeycomb structure. In a honeycomb structure 1 shown in FIG. 1A, plural honeycomb units 2 are bonded to each other with an adhesive 5 and arranged together. Each honeycomb unit 2 is formed so that cells 3 are aligned in parallel to each other. It is preferable that a side surface (a surface where the cells are not open) of the honeycomb structure 1 be covered with a coating material layer 6 formed of a coating layer to keep the strength of the honeycomb structure. As shown in the perspective view of FIG. 2, the honeycomb unit 2 forming the honeycomb structure 1 includes plural cells 3 extending in the longitudinal direction. Cell walls 4 separate the cells 3 in the honeycomb unit 2.

The honeycomb unit includes zeolite, an inorganic fiber, and alumina. The honeycomb unit may further include other inorganic particles and/or an inorganic binder. The honeycomb unit includes 61 to 70 mass% of zeolite, 15 to 25 mass% of the inorganic fiber, and 10 to 20 mass% of alumina which is not included in the zeolite and the inorganic fiber. In the honeycomb unit of this invention, zeolite functions to convert NOx in the vehicle exhaust gas. Therefore, when zeolite included in the honeycomb unit becomes less than 61 mass%, a NOx converting performance of the honeycomb unit may be reduced depending on the cell structure. When the honeycomb unit includes more than 70 mass% of zeolite, the strength required for the honeycomb unit used as a NOx converting catalyst for vehicle exhaust gas cannot be maintained depending on the cell structure.

In the honeycomb unit of the honeycomb structure of the invention, an opening ratio as an area ratio of apertures to a cross-section vertical to the longitudinal direction of the cells (a face where plural cells are open, which hereinafter corresponds to a cross-section of the honeycomb unit) is 57% or more. It is preferable that the opening ratio of the honeycomb unit be 57% or more so as not to increase the pressure loss of the exhaust gas to be converted.

When the content of zeolite in the honeycomb unit is x (mass%) and the content x of zeolite is less than 66 mass%, an opening ratio (%) of the honeycomb unit of the honeycomb structure of the invention is a y value expressed by the following formula (1) or less.

$$y = 0.55x + 30 \quad \ldots\ldots\ldots(1)$$

When the content x (mass%) of zeolite is 66 mass% or more, the opening ratio (%) is a y value expressed by the following formula (2) or less.

$$y = -0.25x + 82.8 \quad \ldots\ldots\ldots(2)$$

The formulas (1) and (2) are experimentally obtained to keep the preferable NOx converting ratio and/or the strength of the honeycomb unit. When the opening ratio becomes greater than the y value in the formula (1), the NOx converting ratio and/or the strength of the honeycomb unit are reduced even when the content of zeolite is 61 mass% or more.

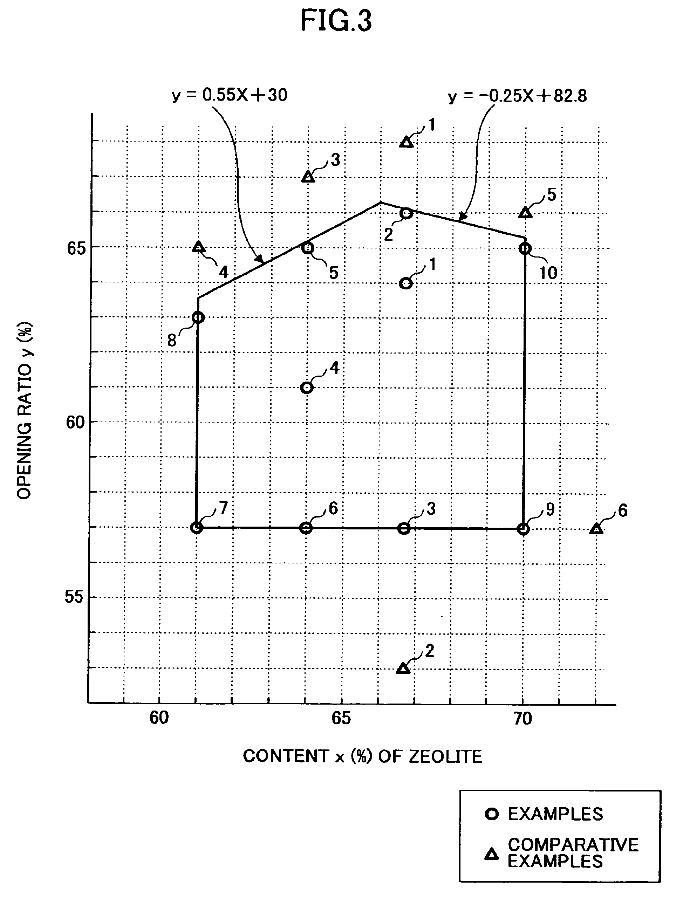

In these two formulas, the y values are both 66.3% when the content of zeolite is 66 mass% as shown in the graph of FIG. 3. That is, as shown in FIG. 3, the content x (mass%) of zeolite and the opening ratio y (%) of the honeycomb unit in the invention are required to be within an area surrounded by five lines of x = 61, x = 70, y = 57, y = 0.55x + 30 (formula (1)), and y = -0.25x + 82.8 (formula (2)).

It is preferable that the cell wall of the honeycomb unit in the honeycomb structure of the invention have a porosity of 25 to 40%. With the porosity of less than 25%, the exhaust gas does not easily penetrate deep enough into the cell wall. Thus, the NOx converting ratio becomes insufficient in some cases. Moreover, when the porosity of the honeycomb unit becomes more than 40%, the strength of the cell wall in the honeycomb unit is reduced in some cases.

It is preferable that the honeycomb unit in the honeycomb structure of the invention have a cell density of the honeycomb unit cross-section of 39 to 124 cells/cm$^2$, or more preferably 62 to 124 cells/cm$^2$. When the cell density is less than 39 cells/cm$^2$, the thickness of the cell wall becomes thick due to the opening ratio, which prevents the exhaust gas from being penetrated deep enough into the cell wall and degrades the NOx converting performance. When the cell density is more than 124 cells/cm$^2$, an area per cell becomes small, which may increase the pressure loss.

In the honeycomb unit in the honeycomb structure of the invention, it is preferable that the content of zeolite per apparent unit volume be 230 g/L or more, and more preferably 245 to 270 g/L. When the content of zeolite per apparent unit volume in the honeycomb unit is less than 230 g/L, the NOx converting performance may be degraded. Moreover, when the content of zeolite per apparent unit volume in the honeycomb unit is more than 270 g/L, the strength of the honeycomb unit and also of the honeycomb structure cannot be maintained in some cases.

The thickness of the cell wall of the honeycomb unit of the invention is preferably 0.15 to 0.35 mm, or more preferably 0.15 to 0.28 mm. When the thickness of the cell wall is less than 0.15 mm, the strength of the honeycomb unit cannot be maintained in some cases. Moreover, when the thickness of the cell wall is more than 0.35 mm, the exhaust gas sometimes does not penetrate deep enough into the cell wall, which may degrade the NOx converting performance.

Hereinafter, a specific honeycomb structure of the invention is described.

(Honeycomb unit)

A honeycomb unit of the honeycomb structure of the invention has what is called a honeycomb structure having plural cells 3 serving as parallel through-holes as shown in FIG. 2. A cross-sectional shape of the cell 3 in the honeycomb unit is not particularly limited. FIG. 2 shows the cell 3 having a square cross-sectional shape, however, the cell 3 may have a substantially triangular cross-sectional shape, a substantially hexagonal cross-sectional shape, a circular cross-sectional shape, a combination of square and octagonal cross-sectional shapes, or the like.

The honeycomb unit includes zeolite, an inorganic fiber, and alumina which is not included in zeolite and the inorganic fiber.

(Zeolite)

Zeolite in the honeycomb unit is formed of zeolite particles bonded by inorganic binders or the like. As zeolite, for example, β-type zeolite, Y-type zeolite, ferrierite, ZSM-5 type zeolite, mordenite, faujasite, zeolite A, zeolite L and the like is used. These zeolites may be used alone or in combination.

As zeolite, it is preferable that a mole ratio of silica to alumina (silica/alumina ratio) be 30 to 50.

Moreover, it is preferable that ion-exchanged zeolite, which is the aforementioned zeolite with exchanged ions, be included. Zeolite with ions exchanged in advance may be used to form the honeycomb unit, or ions of zeolite may be exchanged after forming the honeycomb unit. As ion-exchanged zeolite, zeolite with exchanged ions of at least one of metal species: Fe, Cu, Ni, Co, Zn, Mn, Ti, Ag, and V is preferably used. These ion-exchanged zeolites may include one or plural metal species. As ion-exchanged zeolite, it is preferable that Fe or Cu ion-exchanged zeolite, in particular Fe ion-exchanged zeolite be included.

The content (composition rate) of zeolite in the honeycomb unit is 61 to 70 mass% as described above. Further, the content of zeolite per apparent unit volume of the honeycomb unit is preferably 230 g/L, and more preferably 245 to 270 g/L. As zeolite functions to convert NOx, it is preferable that more zeolite be included in the honeycomb unit. However, when only the content of zeolite is increased, contents of other substances (for example, the inorganic fiber and the inorganic binder) are required to be reduced, which affects the strength of the honeycomb unit. Moreover, when the opening ratio of the honeycomb unit is reduced too small to increase the content of zeolite, the flow resistance of the exhaust gas may be too high in the NOx converting reaction.

It is preferable that zeolite include secondary particles with an average particle diameter of 0.5 to 10 $\mu$m. The average particle diameter of the secondary particle may be measured by using the zeolite particles serving as a raw material before firing, which form the secondary particles.

(Inorganic fiber)

In the honeycomb structure of the invention, the honeycomb unit includes 15 to 25 mass% of inorganic fiber. The inorganic fiber included in the honeycomb unit is not particularly limited, but one or more inorganic fibers selected from an alumina fiber, a silica fiber, a silicon carbide fiber, a silica alumina fiber, a glass fiber, a potassium titanate fiber, and an aluminum borate fiber is used. These inorganic fibers may be mixed with zeolite or an inorganic binder in a raw material state and used to mold and fire a honeycomb unit. The inorganic fiber functions to improve the strength of the honeycomb unit. As the inorganic fiber, a short fiber such as a whisker may be used as well as a long fiber.

When the honeycomb unit includes less than 15 mass% of the inorganic fiber, the strength of the honeycomb unit is not sufficiently improved. When the honeycomb unit includes more than 25 mass% of the inorganic fiber, the contents of other substances such as zeolite are reduced, which may degrade the NOx converting performance of the honeycomb unit.

The inorganic fiber is an inorganic material having a large aspect ratio (fiber length/fiber diameter), which is particularly effective in improving a bending strength. The aspect ratio of the inorganic fiber is preferably 2 to 1000, or more preferably 5 to 800, and further more preferably 10 to 500. When the aspect ratio of the inorganic fiber is less than 2, the strength of the honeycomb unit is not improved much. When the aspect ratio of the inorganic fiber is more than 1000, a molding die is easily clogged when molding the honeycomb unit, which degrades a molding property. Further, the inorganic fiber may be broken in the case of molding such as extrusion molding. In this case, lengths of the inorganic fibers vary and the strength of the honeycomb unit is reduced. In the case where the aspect ratios of the inorganic fibers are distributed, an average value is to be employed.

(Alumina)

In the honeycomb structure of the invention, the honeycomb unit includes 10 to 20 mass% of alumina other than alumina included in the zeolite and the inorganic fiber. Such alumina in the honeycomb unit is derived from an inorganic binder such as alumina sol added as a binder in some cases. Moreover, such alumina is derived from an alumina particle or the like added as a raw material in some cases. Alumina used in the invention may be any alumina other than alumina included in zeolite or the inorganic fiber, however, it is preferable that alumina derived from alumina sol (alumina included in alumina sol) be used. Alumina has an effect to strengthen bonds between the particles. When alumina included in the honeycomb unit is less than 10 mass%, the strength of the honeycomb unit is reduced. When alumina included in the honeycomb unit is more than 20 mass%, the contents of zeolite and the inorganic fiber are relatively reduced. Thus, the NOx converting performance and the strength of the honeycomb unit may be reduced.

(Inorganic binder)

In the honeycomb structure of the invention, a honeycomb unit may include an inorganic binder. As the honeycomb unit is a fired body, moisture or the like in the inorganic binder is evaporated and only a solid content is left in the honeycomb unit. In this specification, an inorganic binder in the honeycomb unit is this solid content in the inorganic binder. As the inorganic binder in a raw material state, it is normally preferable to use alumina sol which can be used as the alumina source as well. As other inorganic binders, for example, there are inorganic sol, clay-type binder, and the like. As inorganic sol, for example, there are silica sol, titania sol, sepiolite sol, attapulgite sol, liquid glass, and the like. As the clay-type binder, for example, there are white clay, kaolin, montmorillonite, plural chain structure type clay (sepiolite and attapulgite), and the like. These inorganic sol and clay type binders may be used alone, in combination, or in combination with alumina sol.

(Inorganic particle)

The honeycomb unit of the invention may include an alumina particle in a raw material state as an alumina component. As the alumina particle, it is preferable to use γ alumina or boehmite. The alumina particle functions to improve the strength of the honeycomb unit.

The honeycomb unit of the invention may include an inorganic particle other than an alumina particle and a zeolite particle. In the honeycomb structure of the invention, an inorganic particle other than the alumina particle and the zeolite particle, which is included in the honeycomb unit, is not particularly limited. For example, silica, zirconia, titania, ceria, mullite, and these precursors can be used. One or more kinds of inorganic particles may be included with the alumina particle.

An inorganic particle such as an alumina particle, which is used in the honeycomb structure of the invention, has a hydroxyl group in a raw material state before firing. As most of inorganic compound particles for industrial use do, a raw material inorganic particle in the honeycomb structure of the invention before firing and a raw material zeolite particle have a hydroxyl group. This hydroxyl group functions to cause a dehydration condensation reaction and enhancing bonds between the particles when firing the honeycomb unit. An alumina particle such as γ alumina and boehmite, in particular, forms a strong bond by a dehydration condensation reaction that occurs when firing the honeycomb unit.

In the honeycomb structure of the invention, it is preferable that the inorganic particle other than zeolite, which is used as a raw material, have a secondary particle with an average particle diameter smaller than an average particle diameter of a secondary particle of zeolite. In particular, it is preferable that the average particle diameter of the inorganic particle be 1/10 to 1/1 of the average particle diameter of zeolite. In this manner, the strength of the honeycomb unit is enhanced by a bonding force of inorganic particles with a small average particle diameter.

(Catalytic component)

The cell wall of the honeycomb unit in the honeycomb structure of the invention may further carry a catalytic component. The catalytic component is not particularly limited, but a noble metal, an alkali metal compound, an alkali earth metal compound, and the like may be used. As the noble metal, for example, one or more of platinum, palladium, and rhodium is suggested. As the alkali metal compound, one or more compound of potassium, sodium, and the like is suggested. As the alkali earth metal, for example, a compound such as barium is suggested.

(Manufacture of honeycomb unit)

An example of a method for manufacturing a honeycomb unit in the honeycomb structure of the invention is described. First, a raw material paste including the aforementioned inorganic binder such as zeolite and alumina sol and inorganic fiber at the predetermined ratios is manufactured, which is formed into a honeycomb unit molded body by extrusion molding or the like. In addition, an inorganic particle including an alumina particle, an organic binder, a pore-forming material, a disperse medium, a forming aid, and the like may be provided to the raw material paste. The organic binder is not particularly limited, but one or more organic binders selected from methylcellulose, carboxymethyl cellulose, hydroxyethyl cellulose, polyethylene glycol, a phenol resin, an epoxy resin, and the like is suggested. The organic binder is preferably mixed with the raw material paste in a ratio of 1 to 10 parts by weight to 100 parts by total weight of a solid content of the raw material. As the pore-forming material, resin powder of an acrylic acid-based resin, a polyolefin-based resin, a polystyrene-based resin, a polyester-based resin, and the like can be used. The organic binder and the pore-forming material are important for the extrusion molding and for controlling the porosity of the honeycomb unit. The pore-forming material may be increased or decreased according to a desired porosity. The disperse medium is not particularly limited, but water, an organic solvent (such as toluene), alcohol (such as methanol), and the like can be used. The forming aid is not particularly limited, but ethylene glycol, dextrin, fatty acid soap, polyalcohol, and the like can be used.

The raw material paste is not particularly limited, but preferably formed by mixing or kneading materials. For example, a mixer and an attritor may be used to mix the materials, or a kneader may be used to sufficiently knead the substances. The method to shape the raw material paste is not particularly limited. For example, it is preferable to shape the raw material paste by extrusion molding or the like in a shape with predetermined cell density or opening ratio. At this time, the honeycomb unit molded body is shaped considering shrinkage caused in subsequent drying and firing steps.

Next, the honeycomb unit molded body is dried. A drying apparatus to dry the honeycomb unit is not particularly limited, but a microwave drying apparatus, a hot air drying apparatus, a dielectric drying apparatus, a decompression drying apparatus, a vacuum drying apparatus, a freeze drying apparatus, and the like can be used. The dried body is preferably degreased. Conditions of the degreasing are not particularly limited, but it is preferable to degrease the honeycomb unit molded body at about 400°C for two hours though depending on the kind and amount of the organic material included in the molded body. Further, the dried and degreased honeycomb unit molded body is fired. Conditions to fire the honeycomb unit molded body are not particularly limited, but the temperature is preferably 600 to 1200°C, or more preferably 600 to 1000°C. With the firing temperature of lower than 600°C, sintering of the honeycomb unit does not proceed, therefore, the strength of the honeycomb unit is not enhanced. With the firing temperature of higher than 1200°C, zeolite crystals are broken or the sintering proceeds too much. Thus, a porous honeycomb unit with an appropriate porosity cannot be manufactured in some cases.

(Honeycomb structure)

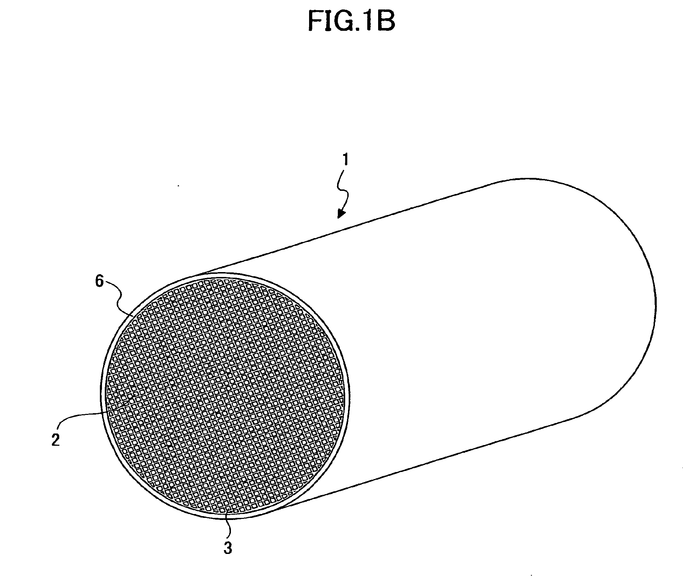

The honeycomb structure of the invention includes one or plural honeycomb units. In the honeycomb structure including plural honeycomb units, the honeycomb units are stacked and arranged so that the through holes of the cells in each honeycomb unit are aligned in the same direction. FIGS. 1A and 1B are perspective views showing examples of the honeycomb structure of the invention. In the honeycomb structure 1 shown in FIG. 1A, the plural honeycomb units 2 are bonded to each other with the adhesive 5 and arranged together. Each honeycomb unit 2 is formed so that the cells 3 are aligned in parallel to each other in the longitudinal direction. The honeycomb structure 1 shown in FIG. 1B is formed of one honeycomb unit 2. In this manner, the honeycomb structure 1 may be formed of one or plural honeycomb units 2. A side surface (a surface in parallel to the longitudinal direction of the cells, hereinafter simply called a side surface) of the honeycomb structure 1 is preferably covered with the coating material layer 6 to keep the strength of the honeycomb structure 1.

The honeycomb structure 1 shown in FIGS. 1A and 1B has the cross-section in a circular shape, however, the honeycomb structure of the invention may have the cross-section in a square shape, a rectangular shape, a hexagonal shape, a sector shape, and the like. The exterior of the honeycomb structure may be cut if necessary. The cross-section of the honeycomb structure may be determined depending on the kind of usage, but it is preferable that the cross-sectional area is the same along the longitudinal direction.

(Manufacture of honeycomb structure)

First, a manufacturing method of a honeycomb structure formed of plural honeycomb units as shown in FIG. 1A is described. An adhesive is applied to a side surface (a surface that is not the cross-section) of the honeycomb units and the honeycomb units are sequentially bonded. A body of the bonded honeycomb units is dried and solidified to form a honeycomb unit bonded body in a predetermined size. A side surface of the honeycomb unit bonded body is cut to be formed in a desired shape.

The adhesive is not particularly limited, but an inorganic binder in which an inorganic particle is mixed, an inorganic binder in which an inorganic fiber is mixed, an inorganic binder in which an inorganic particle and an inorganic fiber are mixed, and the like can be used. Further, an organic binder may be added to these adhesives. The organic binder is not particularly limited, but one or more organic binders selected from polyvinyl alcohol, methyl cellulose, ethyl cellulose, carboxymethyl cellulose, and the like is suggested.

It is preferable that a layer of the adhesive to bond the plural honeycomb units have a thickness of 0.5 to 2 mm. The number of honeycomb units to be bonded may be appropriately determined in accordance with the size of the honeycomb structure. The honeycomb unit bonded body formed by bonding the honeycomb units with the adhesive may be appropriately cut or polished corresponding to the shape of the honeycomb structure.

A coating material is applied to an exterior (side surface) of the honeycomb structure, where the through-holes are not open, and dried and solidified to form a coating material layer. Since the exterior of the honeycomb structure is protected in this manner, the strength of the honeycomb structure can be enhanced. The coating material is not particularly limited, but the same material as the adhesive or a different material than the adhesive may be used. The coating material may have the same or different blending ratio as the adhesive. The thickness of the coating material layer is not particularly limited, but preferably 0.1 to 2 mm. The coating material layer may not be formed if unnecessary.

After bonding the plural honeycomb units with the adhesive, the honeycomb unit bonded body preferably undergoes a heating process. When the coating material layer is provided, the honeycomb unit bonded body is preferably degreased after forming the adhesive material layer and the coating material layer. When an organic binder is included in the adhesive material layer and the coating material layer due to the degreasing, the organic binder can be degreased to be removed. Conditions of the degreasing may be determined depending on the kind and amount of the included organic matter, but the degreasing is preferably performed at about 700°C for about two hours.

As an example of the honeycomb structure, FIG. 1A shows a schematic view of the honeycomb structure 1 formed by bonding plural rectangular solid honeycomb units 2 having a cross-section, which is vertical to the longitudinal direction of the through-holes, in a square shape, and cutting the outline of the honeycomb unit bonded body in a cyrindrical shape. After that, the coating material layer 6 is formed over this honeycomb structure 1. The honeycomb units 2 may be formed with a predetermined cross-section shape of, for example, a sector shape or a square shape and bonded to each other to form a honeycomb structure in a predetermined shape to omit cutting and polishing steps.

A manufacturing method of a honeycomb structure formed of one honeycomb unit as shown in FIG. 1B is described below. The honeycomb structure shown in FIG. 1B can be manufactured similarly to the honeycomb structure shown in FIG. 1A except in that only one honeycomb unit is used. The honeycomb unit is formed in a cyrindrical shape by cutting, polishing, and the like as required, a coating material layer formed of the same adhesive as the honeycomb structure shown in FIG. 1A is formed over the exterior of the honeycomb unit, and the honeycomb unit is degreased, similarly to the manufacturing method of the honeycomb structure formed of the plural honeycomb units. In this manner, the honeycomb unit formed of one honeycomb unit as shown in FIG. 1B can be manufactured.

[Examples]

Hereinafter, examples of a honeycomb structure manufactured with various conditions are described, however, the present invention is not limited to these examples.

(Example 1)

(Manufacture of honeycomb unit)

Fe zeolite particles (3 mass% of Fe ion-exchanged β-type zeolite, a silica/alumina ratio of 40, a specific surface area of 110 m$^2$/g, and an average particle diameter of 2 μm (the average particle diameter is an average particle diameter of a secondary particle, the same applies hereinafter)), an alumina composition (alumina sol with a solid concentration of 20 mass%) other than alumina included in zeolite and an alumina fiber, and an alumina fiber (an average fiber diameter of 6 μm and an average fiber length of 100 μm) were mixed at a ratio of 66.7 mass%, 13.3 mass%, and 20 mass% respectively. 10 parts by weight of methyl cellulose was added as organic binder to 100 parts by total weight of the Fe zeolite particles, the alumina composition, and the alumina fiber and mixed. Further, a plasticizer, a surfactant, and a lubricant were added at small amounts to the mixture. By mixing and kneading the mixture by controlling the viscosity with water, a composition to be molded was obtained. Next, this composition was extruded by an extruder, thereby a raw molded honeycomb body was obtained.

The raw molded honeycomb body was then sufficiently dried by using a microwave drying apparatus and a hot air drying apparatus and degreased at 400°C for two hours. After that, the molded honeycomb body was fired at 700°C for two hours, thereby a honeycomb unit in a cyrindrical shape having cells in a quadrangle (square) shape was formed (cross-section of 35 mm x 35 mm x length 150 mm) with a wall thickness (thickness of a cell wall) of 0.25 mm, a cell density of 62 cells/cm$^2$, an opening ratio of 64%, and a zeolite content of 250 g/L per apparent unit volume of the honeycomb unit. The porosity of the cell wall was measured by a mercury porosimeter. The Fe ion-exchanged zeolite was formed by impregnating zeolite particles in a ferric nitrate ammonium solution to exchange Fe ions. The amount of exchanged Fe ions was obtained by an IPC light emission analysis using an ICPS-8100 (manufactured by SHIMADZU CORPORATION).

Table 1 shows compositions (mass%) of the Fe zeolite particles, the alumina composition, and the alumina fiber as raw materials used for manufacturing the honeycomb unit, a thickness of a wall, a cell density, and an opening ratio of the honeycomb unit.

Table 1

| | Composition (mass%) | | | Cell structure | | | | Evaluation | | |
|---|---|---|---|---|---|---|---|---|---|---|
| | Fe zeolite | Alumina | Alumina fiber | Cell wall (mm) | Cell density (cells/cm$^2$) | Opening ratio (%) | (y value) | Converting ratio (%) | Bending strength (Mpa) | Pressure loss |
| Example 1 | 66.7 | 13.3 | 20 | 0.25 | 62 | 64 | 66.1 | 91 | 2.1 | Good |
| Example 2 | 66.7 | 13.3 | 20 | 0.20 | 85 | 66 | 66.1 | 86 | 1.7 | Good |
| Example 3 | 66.7 | 13.3 | 20 | 0.28 | 78 | 57 | 66.1 | 96 | 3.1 | Good |
| Example 4 | 64 | 16 | 20 | 0.20 | 116 | 61 | 65.2 | 92 | 2.4 | Good |
| Example 5 | 64 | 16 | 20 | 0.25 | 58 | 65 | 65.2 | 83 | 1.8 | Good |
| Example 6 | 64 | 16 | 20 | 0.28 | 78 | 57 | 65.2 | 95 | 3.0 | Good |
| Example 7 | 61 | 19 | 20 | 0.28 | 78 | 57 | 63.6 | 94 | 3.2 | Good |
| Example 8 | 61 | 19 | 20 | 0.30 | 47 | 63 | 63.6 | 81 | 2.4 | Good |
| Example 9 | 70 | 10 | 20 | 0.28 | 78 | 57 | 65.3 | 98 | 2.7 | Good |
| Example 10 | 70 | 10 | 20 | 0.20 | 93 | 65 | 65.3 | 93 | 1.6 | Good |
| Comparative Example 1 | 66.7 | 13.3 | 20 | 0.25 | 47 | 68 | 66.1 | 79 | 1.3 | Good |
| Comparative Example 2 | 66.7 | 13.3 | 20 | 0.25 | 116 | 53 | 66.1 | 97 | 3.5 | Bad |
| Comparative Example 3 | 64 | 16 | 20 | 0.20 | 78 | 67 | 65.2 | 75 | 1.4 | Good |
| Comparative Example 4 | 61 | 19 | 20 | 0.25 | 58 | 65 | 63.6 | 74 | 2.0 | Good |
| Comparative Example 5 | 70 | 10 | 20 | 0.20 | 85 | 66 | 65.3 | 93 | 1.0 | Good |
| Comparative Example 6 | 72 | 8 | 20 | 0.28 | 78 | 57 | 64.8 | 98 | 1.1 | Good |

EP 2 130 589 B1

(Manufacture of honeycomb structure)

An adhesive in a paste form was applied over a side surface of the manufactured honeycomb unit to form an adhesive material layer with a thickness of 1 mm. The adhesive layer was then dried and solidified at 120°C. Then, four stages and four rows of the honeycomb units were bonded to each other to form a honeycomb unit bonded body in an approximate rectangular solid shape. The adhesive material paste was formed by mixing 29 mass% of alumina particles (an average particle diameter of 2 μm), 7 mass% of alumina fibers (an average fiber diameter of 6 μm and an average fiber length of 100 μm), 34 mass% of alumina sol (20 mass% of solid concentration), 5 mass% of carboxymethyl cellulose, and 25 mass% of water. A side wall of the honeycomb unit bonded body was cut into a cylindrical shape by using a diamond cutter. The adhesive paste was applied as a coating material with a thickness of 0.5 mm over the exterior of a side wall of the honeycomb unit bonded body in the cylindrical shape, thereby a columnar honeycomb unit bonded body in the same shape as the honeycomb structure shown in FIG. 1A was manufactured. The cylindrical honeycomb unit bonded body was dried and solidified at 120°C and held at 700°C for two hours to degrease the adhesive material layer and the coating material. In this manner, a honeycomb structure in a cylindrical shape (with a diameter of about 144 mm x length of 150 mm) was manufactured.

(Examples 2 to 10, Comparative Examples 1 to 6)

Honeycomb units and honeycomb structures of Examples 2 to 10 and Comparative Examples 1 to 6 were manufactured similarly to Example 1 except that the compositions (mass%) of the Fe zeolite particle, alumina composition, and alumina fiber in Example 1 were changed as shown in Table 1 and the die (mold) of the extruder was changed. Table 1 shows compositions (mass%) of the Fe zeolite particles, the alumina composition, and the alumina fiber as raw materials, a thickness of a wall, a cell density, and an opening ratio of the honeycomb units of Examples 2 to 10 and Comparative Examples 1 to 6.

(Performance evaluation of honeycomb structures)

A NOx converting rate of an exhaust gas, a bending strength, and a pressure loss caused when flowing the exhaust gas in the honeycomb structure manufactured in Examples 1 to 10 and Comparative Examples 1 to 6 were measured as follows and results are shown in Table 1.

(NOx converting rate)

Crylindrical honeycomb portions with a diameter of 30 mm and a length of 50 mm were cut out of the honeycomb units of Examples 1 to 10 and Comparative Examples 1 to 6, to be used as evaluation samples. The evaluation samples were heated at 700°C for 48 hours so as to simulate aging. Then, with the evaluation samples kept at 250°C, a simulation gas of a vehicle exhaust gas with a composition as shown in Table 2 heated at 250°C was introduced at SV35000/hr. A reduction ratio (%) of an NO composition in the simulation gas after using the evaluation sample is shown as the NOx converting ratio (%).

Table 2

| Gas | Composition |
| --- | --- |
| $N_2$ | Balance |
| $CO_2$ | 5 vol% |
| $O_2$ | 14 vol% |
| NO | 350 ppm |
| $NH_3$ | 350 ppm |
| $H_2O$ | 5 vol% |
| SV | 35000/hr |

(Bending strength)

The bending strength of each honeycomb unit was measured according to the three-point bending test method JIS-R160. Specifically, a testing system 5582 manufactured by Instron Corporation was used to apply a breaking load W in a vertical direction to the honeycomb unit with a span L of 135 mm and a crosshead speed of 1 mm/min. After calculating a cross-section secondary moment Z by subtracting a moment of hollows in the cells, a bending strength $\sigma$ was calculated by a formula ($\sigma$ = WL/4Z).

(Measurement of pressure loss of exhaust gas)

A side surface of the cylindrical honeycomb structure (with a diameter of about 144 mm x length 150 mm) formed in each example and comparative examples was covered with an alumina mat and put into a metal case. By flowing an engine exhaust gas from one side of the case, the pressure loss was measured with an engine speed of 1500 rpm and a torque of 50 Nm for five minutes. As for the evaluation, (Good) indicates a pressure loss of 1.0 kP or less and (Bad) indicates a pressure loss of more than 1.0 kP.

(Measurement results)

The NOx converting ratio, the bending strength, and the pressure loss of an exhaust gas in Examples 1 to 10 and Comparative Examples 1 to 6 are shown in Table 1.
The NOx converting ratios of the honeycomb structures of Examples 1 to 10 were as high as 80% or more while the NOx converting ratios of the honeycomb structures of Comparative Examples 1, 3, and 4 were as low as 74 to 79%.
The bending strengths of the honeycomb units of Examples 1 to 10 were 1.5 MPa or higher while the bending strengths of the honeycomb structures of Comparative Examples 1, 3, 5, and 6 were lower than 1.5 MPa.
The pressure losses of the honeycomb structures of Examples 1 to 10 and Comparative Examples 1 and 3 to 6 were less than 1.0 kPa while the pressure loss of the honeycomb structure of Comparative Example 2 was more than 1.0 kPa. This is thought because the opening ratios of the honeycomb units in the honeycomb structures of Examples 1 to 10 and Comparative Examples 1 and 3 to 6 were 57% or more while the aperture ratio of the honeycomb unit in the honeycomb structure of Comparative Example 2 was as small as 53%, which increased a flow resistance of the exhaust gas.
FIG. 3 shows a relationship between the content x (mass%) of zeolite and an opening ratio y (%) of the evaluation results. In FIG. 3, o indicates an example and $\Delta$ indicates a comparison. Numbers attached to these marks indicate the numbers of examples and comparative examples. The content x (mass%) of zeolite and the aperture ratio y (%) of the honeycomb structures shown in Examples 1 to 10 are required to be inside a pentagon surrounded by five lines of x = 61, y = 57, x = 70, y = 0.55x + 30, and y = -0.25x + 82.8. Since the honeycomb structures of Examples 1 to 10 are in this area and satisfy all the three performances (NOx converting ratio, bending strength, and pressure loss), these honeycomb structures are favorable for converting a vehicle exhaust gas. However, the content x (mass%) of zeolite and the opening ratio y (%) of the honeycomb structures of Comparative Examples 1 to 6 are not in this area and do not satisfy at least one of the three performances. Therefore, these honeycomb structures are not favorable for converting a vehicle exhaust gas.
The honeycomb structure of the invention is formed of a honeycomb unit with high strength and has a high NOx converting ratio, a high strength, and less pressure loss of an exhaust gas. Therefore, the honeycomb structure of the invention can be used as a catalyst for converting a vehicle exhaust gas, which is required to be small in size and lightweight. In particular, the honeycomb structure of the invention is preferably used as a NOx converting catalyst supporter for an SCR system (for example, a diesel exhaust gas converting system using ammonia).

**Claims**

1. A honeycomb structure (1) comprising a honeycomb unit (2) in which plural cells (31) extending from one end face to the other end face of the honeycomb structure in a longitudinal direction are separated by a cell wall (4), wherein the honeycomb unit includes 61 to 70 mass% of zeolite, 15 to 25 mass% of an inorganic fiber, and 10 to 20 mass% of alumina other than alumina included in the zeolite and the inorganic fiber; the honeycomb unit has an opening ratio of 57% or more; the opening ratio (%) is a y value shown in a following formula (1) or less when a content x (mass%) of the zeolite included in the honeycomb unit is less than 66 mass%;

$$y = 0.55x + 30 \qquad \ldots \ldots \ldots \ldots (1);$$

and

the opening ratio (%) is a y value shown in a following formula (2) or less when the content x (mass%) of the zeolite included in the honeycomb unit is 66 mass% or more;

$$y = -0.25x + 82.8 \ldots\ldots\ldots\ldots (2).$$

2. The honeycomb structure as claimed in claim 1, wherein a porosity of the cell wall is 25 to 40%.

3. The honeycomb structure as claimed in claim 1 or 2, wherein a cell density of the honeycomb unit is 39 to 124 cells/cm$^2$.

4. The honeycomb structure as claimed in any one of claims 1 to 3, wherein a contained amount of the zeolite per apparent unit volume of the honeycomb unit is 230 g/L or more.

5. The honeycomb structure as claimed in any one of claims 1 to 4, wherein the zeolite includes at least one of β-type zeolite, Y-type zeolite, ferrierite, ZSM-5-type zeolite, mordenite, faujasite, zeolite A, and zeolite L.

6. The honeycomb structure as claimed in any one of claims 1 to 5, wherein the zeolite has a mole ratio of silica to alumina (silica/alumina ratio) of 30 to 50.

7. The honeycomb structure as claimed in any one of claims 1 to 6, wherein the zeolite includes an exchanged ion of at least one of Fe, Cu, Ni, Co, Zn, Mn, Ti, Ag, and V.

8. The honeycomb structure as claimed in any one of claims 1 to 6, wherein the zeolite includes an exchanged ion of Fe.

9. The honeycomb structure as claimed in any one of claims 1 to 8, wherein the inorganic fiber includes at least one of an alumina fiber, a silica fiber, a silicon carbide fiber, a silica alumina fiber, a glass fiber, a potassium titanate fiber, and an aluminum borate fiber.

10. The honeycomb structure as claimed in any one of claims 1 to 9, wherein the alumina is derived from alumina sol.

11. The honeycomb structure as claimed in any one of claims 1 to 10, wherein the honeycomb unit is a plurality of honeycomb units that are bonded to each other with an adhesive (5).

12. the honeycomb structure as claimed in any one of claims 1 to 10, wherein the honeycomb unit is a single honeycomb unit.

**Patentansprüche**

1. Wabenstruktur (1) mit einer Wabeneinheit (2), in der eine Mehrzahl von Zellen (31), die sich von einer Endfläche zur anderen Endfläche der Wabenstruktur in einer Längsrichtung erstrecken, durch eine Zellenwand (4) getrennt sind, wobei die Wabeneinheit einen Massenanteil von 61 bis 70% Zeolith, 15 bis 25% einer anorganischen Faser, und 10 bis 20% Aluminiumoxid neben dem Aluminiumoxid, das in dem Zeolith und der anorganischen Faser enthalten ist, aufweist;

und die Wabeneinheit ein Öffnungsverhältnis von 57% oder mehr aufweist,

wobei das Öffnungsverhältnis (%) ein y-Wert, der in der folgenden Formel (1) gezeigt ist, oder weniger ist, wenn ein Anteil x (Massenprozent) des Zeoliths, welches in der Wabeneinheit enthalten ist, einen Massenanteil von weniger als 66% aufweist

$$y = 0{,}55x + 30 \ldots\ldots (1);$$

und

das Öffnungsverhältnis (%) ein y-Wert, der in der folgenden Formel (2) gezeigt ist, oder weniger ist, wenn der Anteil x (Massenprozent) des Zeoliths, welches in der Wabeneinheit enthalten ist, einen Massenanteil von 66% oder mehr aufweist;

$$y = -0,25x + 82,8 \ \ldots\ldots\ (2).$$

**2.** Wabenstruktur nach Anspruch 1, wobei eine Porosität der Zellenwand 25 bis 40 % beträgt.

**3.** Wabenstruktur nach Anspruch 1 oder 2, wobei eine Zellendichte der Wabeneinheit 39 bis 124 Zellen/cm$^2$ beträgt.

**4.** Wabenstruktur nach einem der Ansprüche 1 bis 3, wobei eine enthaltene Menge des Zeoliths pro sichtbarer Volumeneinheit der Wabeneinheit 230g/L oder mehr beträgt.

**5.** Wabenstruktur nach einem der Ansprüche 1 bis 4, wobei das Zeolith ein β-Typ Zeolith und/oder ein Y-Typ Zeolith und/oder ein Ferririt und/oder ein ZSM-5-Typ Zeolith und/oder ein Mordenit und/oder ein Faujasit und/oder ein Zeolith A und/oder ein Zeolith L, umfasst.

**6.** Wabenstruktur nach einem der Ansprüche 1 bis 5, wobei das Zeolith ein Molverhältnis von Siliziumdioxid zu Aluminiumoxid (Siliziumdioxid/Aluminiumoxid) von 30 bis 50 aufweist.

**7.** Wabenstruktur nach einem der Ansprüche 1 bis 6, wobei das Zeolith ein ausgetauschtes Ion von zumindest einem von Fe, Cu, Ni, Co, Zn, Mn, Ti, Ag, und V aufweist.

**8.** Wabenstruktur nach einem der Ansprüche 1 bis 6, wobei das Zeolith ein ausgetauschtes Fe-Ion aufweist.

**9.** Wabenstruktur nach einem der Ansprüche 1 bis 8, wobei die anorganische Faser eine Aluminiumoxidfaser und/oder eine Siliziumdioxidfaser und/oder eine Siliziumcarbidfaser und/oder eine Siliziumdioxid-Aluminiumoxidfaser und/oder eine Glasfaser und/oder eine Kaliumtitanitfaser und/oder eine Aluminiumboratfaser umfasst.

**10.** Wabenstruktur nach einem der Ansprüche 1 bis 9, wobei das Aluminiumoxid aus einer Aluminiumoxidlösung abgeleitet ist.

**11.** Wabenstruktur nach einem der Ansprüche 1 bis 10, wobei die Wabeneinheit eine Mehrzahl von Wabeneinheiten aufweist, die miteinander über ein Klebmittel (5) verbunden sind.

**12.** Wabenstruktur nach einem der Ansprüche 1 bis 10, wobei die Wabeneinheit eine einzelne Wabeneinheit darstellt.

## Revendications

**1.** Structure en nid d'abeilles (1) comprenant une unité en nid d'abeilles (2) dans laquelle plusieurs cellules (31) s'étendant d'une face d'extrémité à l'autre face d'extrémité de la structure en nid d'abeilles dans une direction longitudinale sont séparées par une paroi cellulaire (4),
dans laquelle l'unité en nid d'abeilles inclut 61 à 70 % en masse de zéolite, 15 à 25 % en masse d'une fibre inorganique, et 10 à 20 % en masse d'alumine autre que l'alumine incluse dans la zéolite et la fibre inorganique ;
l'unité en nid d'abeilles a un rapport d'ouverture de 57 % ou plus ;
le rapport d'ouverture (%) est une valeur y représentée dans une formule suivante (1) ou moins quand une teneur x (% en masse) de la zéolite incluse dans l'unité en nid d'abeilles est inférieure à 66 % en masse ;

$$y = 0,55x + 30 \qquad (1)\ ;$$

et
le rapport d'ouverture (%) est une valeur y représentée dans une formule suivante (2) ou moins quand la teneur x (% en masse) de la zéolite incluse dans l'unité en nid d'abeilles est de 66 % en masse ou plus ;

$$y = -0,25x + 82,8 \qquad (2).$$

**2.** Structure en nid d'abeilles selon la revendication 1, dans laquelle une porosité de la paroi cellulaire est de 25 à 40 %.

**3.** Structure en nid d'abeilles selon la revendication 1 ou 2, dans laquelle une densité de cellules de l'unité en nid d'abeilles est de 39 à 124 cellules/cm$^2$.

**4.** Structure en nid d'abeilles selon l'une quelconque des revendications 1 à 3, dans laquelle une quantité contenue de la zéolite par volume unitaire apparent de l'unité en nid d'abeilles est de 230 g/l ou plus.

**5.** Structure en nid d'abeilles selon l'une quelconque des revendications 1 à 4, dans laquelle la zéolite inclut au moins une de la zéolite de type β, de la zéolite de type Y, de la ferriérite, de la zéolite de type ZSM-5, de la mordénite, de la faujasite, de la zéolite A et de la zéolite L.

**6.** Structure en nid d'abeilles selon l'une quelconque des revendications 1 à 5, dans laquelle la zéolite a un rapport molaire de la silice sur l'alumine (rapport silice / alumine) de 30 à 50.

**7.** Structure en nid d'abeilles selon l'une quelconque des revendications 1 à 6, dans laquelle la zéolite inclut un ion échangé d'au moins un de Fe, Cu, Ni, Co, Zn, Mn, Ti, Ag et V.

**8.** Structure en nid d'abeilles selon l'une quelconque des revendications 1 à 6, dans laquelle la zéolite inclut un ion échangé de Fe.

**9.** Structure en nid d'abeilles selon l'une quelconque des revendications 1 à 8, dans laquelle la fibre inorganique inclut au moins une d'une fibre d'alumine, d'une fibre de silice, d'une fibre de carbure de silicium, d'une fibre de silice alumine, d'une fibre de verre, d'une fibre de titanate de potassium et d'une fibre de borate d'aluminium.

**10.** Structure en nid d'abeilles selon l'une quelconque des revendications 1 à 9, dans laquelle l'alumine est obtenue à partir de sol d'alumine.

**11.** Structure en nid d'abeilles selon l'une quelconque des revendications 1 à 10, dans laquelle l'unité en nid d'abeilles est une pluralité d'unités en nid d'abeilles qui sont liées les unes aux autres par un adhésif (5).

**12.** Structure en nid d'abeilles selon l'une quelconque des revendications 1 à 10, dans laquelle l'unité en nid d'abeilles est une unité en nid d'abeilles simple.

# FIG.1A

# FIG.1B

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005063653 A
- JP 2675321 B
- EP 0519073 A
- US 2007259770 A1
- EP 2105182 A